# EUROPEAN PATENT SPECIFICATION

(11) **EP 4 159 095 B1**
(45) Date of publication and mention of the grant of the patent: **14.08.2024**
(21) Application number: 21382879.1
(22) Date of filing: 29.09.2021
(51) Int. Cl.: A47J 27/10

(54) **APPARATUS FOR COOKING FOOD AND BLAST CHILLING THE TEMPERATURE OF SAID FOOD, AND ASSOCIATED METHOD**
VORRICHTUNG ZUM KOCHEN VON SPEISEN UND ZUM SCHOCKKÜHLEN DER TEMPERATUR DIESES LEBENSMITTEL UND ZUGEHÖRIGES VERFAHREN
APPAREIL DE CUISSON DES ALIMENTS ET DE REFROIDISSEMENT RAPIDE DE LA TEMPÉRATURE DESDITS ALIMENTS, ET PROCÉDÉ ASSOCIÉ

(43) Date of publication of application: 05.04.2023
(73) Proprietor: CS Centro Stirling, S.Coop., 20550 Aretxabaleta (ES); Basque Culinary Center Fundazioa, 20009 Donostia (ES)
(72) Inventor: ARANCETA AGUIRRE, Francisco Javier, 20550 Aretxabaleta (ES); MARTINEZ, Pablo, 20550 Aretxabaleta (ES); FERNANDEZ DE BASTIDA, Iñaki, 20550 Aretxabaleta (ES); ESKUBI, Mauricio, 20550 Aretxabaleta (ES); PELAEZ PEÑA, Jose Francisco, 20010 Donostia (ES)
(74) Representative: Igartua, Ismael

(56) References cited:
- CA-A1- 3 004 326
- FR-A1- 2 613 590
- US-A- 5 281 426
- US-A1- 2019 374 060

## Description

### TECHNICAL FIELD

The present invention relates to apparatus for cooking food and blast chilling the temperature of said food after it has been cooked.

### PRIOR ART

The method for cooking food based on the "sous-vide" technique (French for "under vacuum") is extremely common today. "Sous-vide" is a cooking method in which food packed in sealed plastic pouches is submerged in hot water, maintaining the integrity of the food by heating it for long periods of time at relatively low temperatures.

In this sense, US20190374060A1 discloses an apparatus comprising a tank for cooking food according to the "sous-vide" technique, in which the food, contained in a sealed plastic pouch, is submerged in a hot water bath. The food can be stored before being cooked in a refrigerating chamber which is communicated with the tank such that the food can be provided in the tank automatically.

If food cooked with the "sous-vide" technique or with other techniques is not for immediate consumption, blast chilling the temperature of said food before it is introduced in a refrigerator or freezing chamber for preservation is known. Blast chilling consists of rapidly reducing the temperature of freshly cooked food or fresh food in order to prevent the appearance and proliferation of bacteria and other pathogenic microorganisms, such as for example, fungi. This blast chilling process furthermore allows maintaining the organoleptic properties of the food, such as its freshness, quality, texture, taste, or smell.

Most food-transmitted diseases are due to bacteria and/or said pathogenic microorganisms (fungi). These organisms and/or microorganisms reproduce between approximately 5°C and 60°C, with the optimal proliferation temperature thereof being close the human body temperature (35°-45°C). This temperature range is what is known as the danger zone; therefore, in order to prevent food contamination by bacteria or fungi, food should remain the shortest time possible in that temperature range.

The conventional way of preserving cooked food was to leave said food to cool in the open air, and it is exactly during this slow process that food runs the greatest risk of bacterial or fungal proliferation. Although a conventional freezer reduces this 'dangerous window', it is not fast enough to prevent the proliferation of bacteria or fungi inside the food.

In this sense, US20180224189A1 discloses a temperature blast chiller for domestic use incorporated in kitchen furniture. The blast chiller comprises an enclosure in which the food to be cooled is arranged, where the food does not have to be placed in sealed pouches, and a cooling unit. The blast chiller is housed in a space of the furniture comprising an air inlet in the upper part allowing the entry of an airflow circulating through the rear part of the furniture to allow cooling the hot elements of the cooling unit, such as the condenser and the compressor.

US5281426A and FR2613590A1 disclose an apparatus for cooking food and blast chilling the temperature of said food. The apparatus comprises a main compartment in which a food is cooked and blast chilled within a corresponding bath contained in the main compartment. US5281426A also discloses a metal wire tray which is submerged in the corresponding bath for holding the food.

### DISCLOSURE OF THE INVENTION

One object of the invention is to provide an apparatus for cooking food and blast chilling the temperature of said food, as defined in the claims.

The apparatus for cooking food and blast chilling the temperature of said food comprises a main compartment in which there is introduced at least one cooking vessel in which a food, preferably vacuum packed, is submersed or immersed in a first fluid forming a hot bath for cooking said food for a given time. The apparatus is configured so that the blast chilling of the temperature of the food after the cooking thereof is also performed in the main compartment inside the cooking vessel, the apparatus comprising to that end hydraulic means for replacing the first fluid in the cooking vessel with a second fluid forming a cold bath.

The hydraulic means of the invention comprise a first conduit for emptying the cooking vessel, a second conduit for filling the cooking vessel, a third conduit for removing the second fluid from an auxiliary vessel where the second fluid is stored, and a hydraulic unit communicated with the first conduit, the second conduit and the third conduit. The first conduit and the second conduit cooperate with the cooking vessel and the third conduit with the auxiliary vessel. The second conduit is communicated with the third conduit through the hydraulic unit for filling the cooking vessel with the second fluid contained in the auxiliary vessel after the cooking vessel has been emptied through the hydraulic unit.

The apparatus also comprises a mobile device, with the first conduit and the second conduit being coupled to said mobile device. The mobile device is configured for being arranged in a removal position in which one end of the first conduit is introduced inside the cooking vessel for removing the fluid contained in the cooking vessel through the hydraulic unit, in a filling position in which one end of the second conduit is introduced inside the cooking vessel for filling the cooking vessel through the hydraulic unit, and in an inactive position in which the end of the first conduit and the end of the second conduit are arranged outside the cooking vessel.

Another object of the invention is to provide a method for cooking and blast chilling the temperature of food using the apparatus of the invention.

The method for cooking and blast chilling the temperature of food comprises a cooking step in which a food, preferably vacuum-packed, is cooked submerged in the first fluid forming the hot bath arranged in a cooking vessel housed in the main compartment of the apparatus of the invention. The method further comprises, with the cooking vessel being housed in the main compartment of the apparatus, a removal step for removing the first fluid from the cooking vessel and a filling step for filling the cooking vessel with the second fluid forming the cold bath, such that a blast chilling step is carried out by keeping the food in the cooking vessel and the cooking vessel in the main compartment.

With the apparatus and the method of the invention, it is possible to unify the cooking and blast chilling processes of the food contained in a cooking vessel, both processes being transparent for the user. The user introduces the vessel with uncooked food in the apparatus of the invention and upon the conclusion of the process of the invention, said food is cooked and its temperature blast chilled, i.e., the user does not have to concern him/herself with transferring the food from one bath to another, i.e., from one vessel to another, in the interval between the cooking step and the blast chilling step. Likewise, the time elapsed between the cooking step and the blast chilling step is minimized, with the proliferation of bacteria or fungi in the cooked food being prevented.

These and other advantages and features of the invention will become apparent in view of the figures and the detailed description of the invention.

### DESCRIPTION OF THE DRAWINGS

Figure 1 shows a perspective view of an apparatus for cooking food and blast chilling the temperature of said food according to an embodiment of the invention.
Figure 2 shows another perspective view of the apparatus of Figure 1 in which the rear part thereof is shown.
Figure 3A shows a front view of the apparatus of Figure 1 but without the doors of the different compartments in order to show the inside of said apparatus.
Figure 3B shows a detailed perspective view of one of the compartments of the apparatus of Figure 3A.
Figure 4A shows a detailed perspective view of another one of the compartments of the apparatus of Figure 1 containing a cooking vessel, with the mobile device being arranged inside the cooking vessel.
Figure 4B shows the detail of Figure 4A but with the cooking vessel being ready to be removed from the apparatus of Figure 1.
Figure 5A shows a sectioned side view of the compartment of Figure 4A.
Figure 5B shows a sectioned side view of the compartment of Figure 4B.
Figure 6 shows the diagram of the hydraulic unit according to another embodiment of the apparatus of the invention.
Figures 6A, 6B, and 6C show different circuits of the diagram of the hydraulic unit shown in Figure 6.

### DETAILED DISCLOSURE OF THE INVENTION

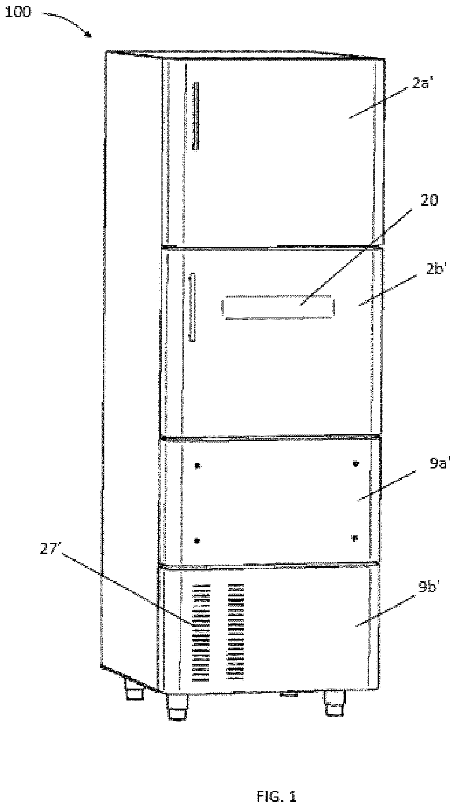

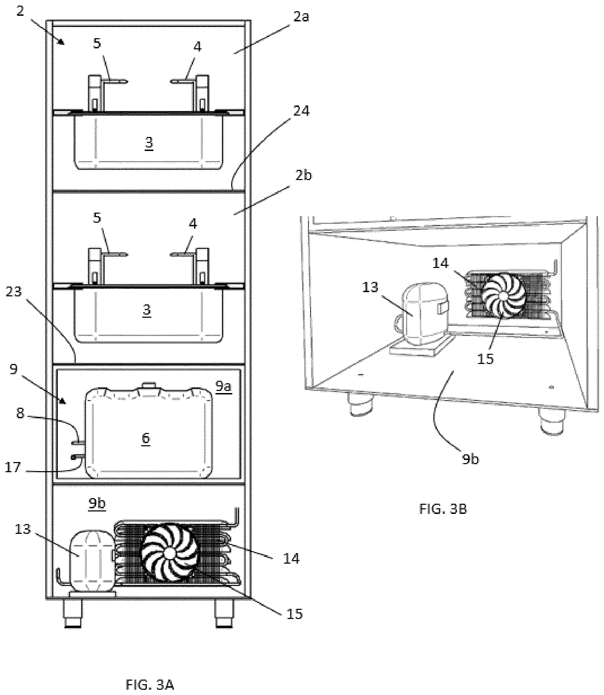

Figure 1 shows a non-limiting example of an embodiment of the apparatus 100 for cooking food and blast chilling the temperature of said food of the invention. Said apparatus 100 comprises a main compartment 2 in which there is introduced at least one cooking vessel 3, as shown in Figure 3A, wherein a food, not shown in the drawings, is submersed or immersed in a first fluid forming a hot bath for cooking said food for a given time during a cooking step. The food is vacuum packed, preferably in plastic pouches, although other means such as cans are not ruled out. This cooking method is known as "sous-vide" (French for "under vacuum") and is extremely advantageous as the integrity of the food is maintained by cooking it for long periods of time at relatively low temperatures. In the context of the invention, the mentioned food must be understood to mean one or more food products, where said products can be vacuum packed individually, i.e., in independent pouches, or together in a single pouch.

If food cooked with the "sous-vide" technique or with other techniques is not for immediate consumption, chill blasting the temperature of said food before it is introduced in a refrigerator or freezing chamber for preservation is known. Blast chilling consists of rapidly reducing the temperature of freshly cooked food or fresh food in order to prevent the appearance and proliferation of bacteria or fungi. This blast chilling process furthermore allows maintaining the organoleptic properties of the food, such as its freshness, quality, texture, taste, or smell.

In this sense, the apparatus 100 of the invention is configured so that the blast chilling of the temperature of the food after the cooking thereof is also performed in the main compartment 2 inside the cooking vessel 3, immediately after the cooking step, the apparatus 100 comprising to that end hydraulic means for replacing the first fluid in the cooking vessel with a second fluid forming a cold bath. The hydraulic means allow the removal of the first fluid from the cooking vessel 3 in a removal step and the subsequent filling of the cooking vessel 3 with the second fluid forming the cold bath in a filling step, such that the blast chilling step for blast chilling the food is carried out by keeping said food in the cooking vessel 3 without removing the cooking vessel 3 from the main compartment 2.

With the apparatus 100 and the method of the invention, it is possible to unify the cooking and blast chilling processes of the food contained in a cooking vessel 3, both processes being transparent for the user. The user introduces the cooking vessel 3 with the uncooked food in the apparatus 100 of the invention and upon the conclusion of the process of the invention, said food is cooked and its temperature blast chilled. The user does not have to concern him/herself with transferring the food from one bath to another, i.e., from one vessel to another, in the interval between the cooking step and the blast chilling step. Likewise, the time elapsed between the cooking step and the blast chilling step is minimized, with the proliferation of bacteria or fungi in the cooked food being prevented.

In the preferred embodiment of the invention, the main compartment 2 of the apparatus 100 of the invention comprises two levels 2a and 2b, with each level being configured for receiving a respective cooking vessel 3, as shown in Figure 3A. In this sense, the main compartment 2 may comprise a single access door which allows accessing the inside of both levels 2a and 2b, or each level 2a and 2b may comprise its own access door 2a' and 2b', as shown in the example of Figure 1. The fact of comprising two or more levels allows more food to be treated at the same time, where the hot bath of one cooking vessel 3 can be utilized to generate the hot bath of another cooking vessel 3 located at a different level, as will be described in detail below, with the power consumption required for heating the first fluid which will form the hot bath thereby being reduced. In the context of the invention, food treatment must be understood to mean cooking said food with the "sous-vide" technique and abruptly cooling (blast chilling) same.

In another variant of the invention, the main compartment 2 comprises a single level such that the apparatus 100 can only house one cooking vessel 3 therein. The fact of comprising only one or more cooking vessels 3 does not change the concept of the invention.

The apparatus 100 of the invention comprises a control screen 20 through which the user can interact with the apparatus 100 and control the state of said apparatus 100. In the preferred embodiment of the invention, said control screen 20 is arranged in the front part of the apparatus 100, where it can be arranged, for example, in one of the access doors 2a' or 2b' to access the main compartment 2, as shown in Figure 1. Optionally, in the case in which the main compartment 2 comprises more than one level, each access door 2a' and 2b' may include a display screen, not shown in the drawings, for checking the state of the food in the cooking vessel 3 of the corresponding level. Nevertheless, the control screen 20 may also be arranged in another location, for example, on one side of the apparatus 100.

The cooking vessel 3 suitable to be introduced in the apparatus 100 of the invention can be a standard vessel, preferably a stainless steel vessel of the type comprising a cavity and a peripheral flange in the upper part. It is not necessary to modify the standard vessel to enable carrying out the method of the invention, i.e., it is not necessary to make holes on the vessel to allow replacing the hot bath with the cold bath and vice versa, as will be described in detail below.

The cooking vessel 3 comprises a peripheral flange 21, at least one segment of which cooperates with a slot 22a arranged on the sides of the main compartment 2. Each side of the main compartment 2 comprises a slot 22a, with both slots 22a facing one another, such that the cooking vessel 3 is suspended from the peripheral flange 21 inside the main compartment 2, as shown in Figures 3A, 4A, 4B, 5A, and 5B. In the preferred embodiment of the invention, each slot 22a is formed from a U-shaped profile 22 extending along the corresponding side wall of the main compartment 2 and towards the bottom of the apparatus 100, said profile 22 projecting from the corresponding side wall such that the inner slot 22a of the U-shaped profile 22 is facing the inner slot 22a of the other profile 22 arranged in the other side wall.

In a variant of the invention not shown in the drawings, the slots 22a may be built directly in the corresponding side walls of the main compartment 2, with said slot 22a penetrating the respective side wall.

If the main compartment 2 comprises several levels, slots 22a according to any of the described embodiments will be arranged at each level.

Optionally, in a variant of the invention not shown in the drawings, the cooking vessel 3 may be supported on the lower base wall 23 of the main compartment 2, or in the separation walls 24 separating the different levels of the main compartment 2.

Although in the preferred embodiment of the invention the different levels are physically separated by a separation wall 24, as shown in Figure 3A, said separation walls 24 would not be required if the cooking vessels 3 are suspended from the perimetral flange 21.

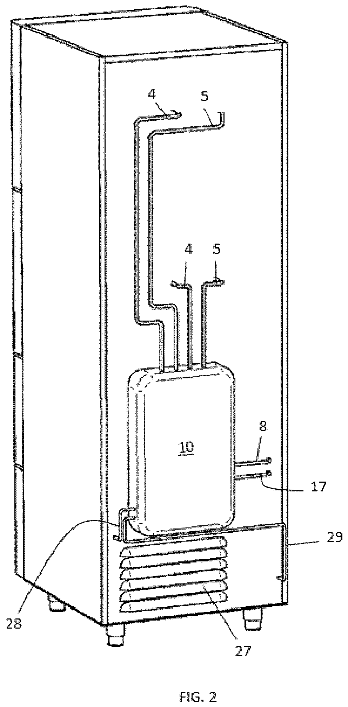

In the preferred embodiment of the invention, the hydraulic means comprise a first conduit 4 for emptying the cooking vessel 3, a second conduit 5 for filling the cooking vessel 3, a third conduit 8 for removing the second fluid from an auxiliary vessel 6 where the second fluid is stored, and a hydraulic unit 10 communicated with the first conduit 4, the second conduit 5, and the third conduit 8, as shown in Figure 2. The first conduit 4 and the second conduit 5 cooperate with the cooking vessel 3 and the third conduit 8 cooperates with the auxiliary vessel 6. For filling the cooking vessel 3 with the second fluid contained in the auxiliary vessel 6, the second conduit 5 of the cooking vessel 3 is communicated with the third conduit 8 of the auxiliary vessel 6 through the hydraulic unit 10, but to that end, the first fluid contained in the cooking vessel 3 must first be removed by connecting the first conduit 4 with a drainage point 19 through the hydraulic unit 10. If the apparatus 10 of the invention comprises a second cooking vessel 3 arranged inside the main compartment 2 and the cooking step has not yet been started, it is possible to utilize the first fluid of the first cooking vessel 3 to fill the second cooking vessel 3, for which the first conduit 4 of the first cooking vessel 3 would be communicated with the second conduit 5 of the second cooking vessel 3 through the hydraulic unit 10.

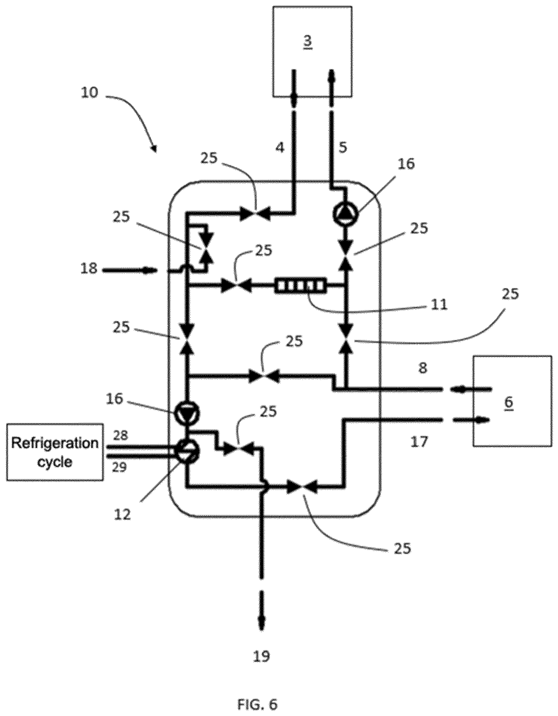

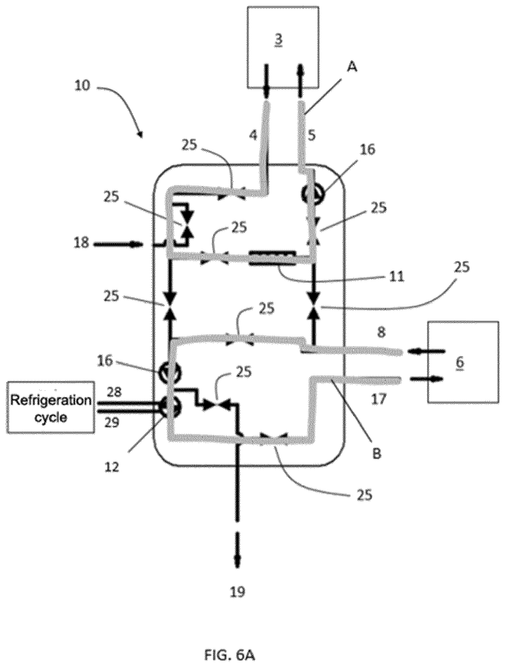

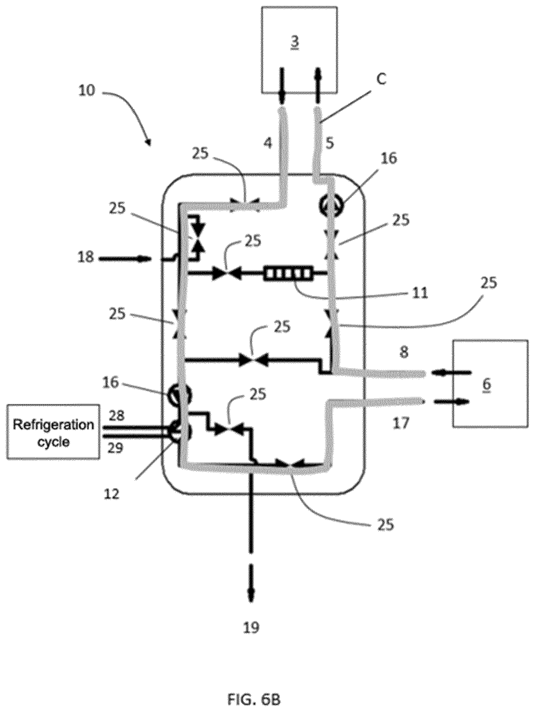

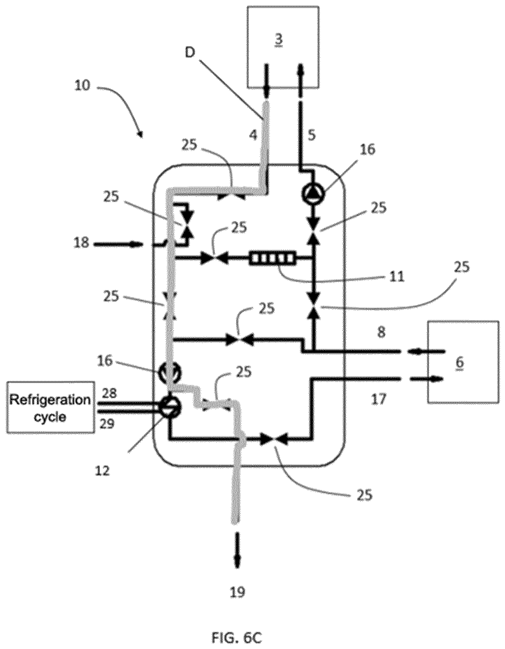

The hydraulic unit 10 shown in the example of Figure 6 relates to an embodiment of the apparatus 100 in which the main compartment 2 comprises a single level (to better understand the invention), i.e., in which the apparatus 1 is configured for receiving a single cooking vessel 3. However, for an embodiment in which the main compartment 2 can receive more than one cooking vessel 3, adaptation would simply have to be made in terms of the number of conduits 4 and 5 cooperating with each cooking vessel 3.

When a cooking vessel 3 is introduced in the main compartment 2 and the hot bath (first fluid) of another cooking vessel 3 will not be utilized, said cooking vessel 3 must first be filled with the first fluid (if the cooking vessel 3 does not have said fluid already included therein), for which the second conduit 5 associated with the cooking vessel 3 is communicated with a supply source 18 of said first fluid through the hydraulic unit 10. In the preferred embodiment of the invention, the first fluid is water and the supply source can be a water network connection.

The hydraulic means of the invention comprise heating means 11 for heating and thereby transforming the first fluid into the hot bath. In the preferred embodiment of the invention, the heating means 11 are arranged in the hydraulic unit 10, as shown in Figure 6, such that the first fluid is heated in the hydraulic unit 10, forming the hot bath as the cooking vessel 3 gradually fills up. In this sense, mains water supplied by the supply source 18 or the first fluid removed from another cooking vessel 3 go through or come into contact with the heating means 11 to then be channeled to the corresponding cooking vessel 3.

In the preferred embodiment of the invention, the heating means are a heat exchanger, for example a heater.

In another embodiment of the invention not shown in the drawings, the heating means 11 are arranged outside the hydraulic unit 10, for example inside the cooking vessel 3, such that the hot bath is formed by heating the first fluid contained in the cooking vessel 3. In this embodiment, the heating means 11 are preferably a resistor. In this case, there can also be arranged inside the corresponding cooking vessel 3 a stirrer, not shown in the drawings, which is submerged in the cooking vessel 3 when in use so as to generate a current or flow inside the cooking vessel 3 and thereby homogenize the temperature of the hot bath.

Optionally, after the removal step for removing the first fluid from the corresponding cooking vessel 3 and before the filling step for filling said cooking vessel 3 with the second fluid, the method of the invention may comprise a refilling step for refilling the cooking vessel 3 with a third fluid, preferably mains water, and a removal step for removing said third fluid after a given time to then proceed with the filling step for filling with the second fluid. The first fluid and the third fluid can be the same, for example mains water, with the difference that the third fluid is not heated and will not be converted into a hot bath. The third fluid will preferably be at room temperature. The refilling step allows the demands of the means necessary for cooling the second fluid (described below) to be reduced, i.e., as a result of the refilling step, said cooling means do not need to have a very high power, and this therefore contributes to reducing the maximum power of the apparatus 100. Therefore, in the refilling step the temperature of the cooked food is reduced to approximately the temperature of the third fluid and the temperature of the food will continue to drop as a result of the cooled second fluid, thereby promoting significant energy savings.

In the preferred embodiment of the invention, the temperature of the hot bath can be comprised in a range of between 40 and 150°C and the cold bath can reach -20°C.

The apparatus 100 of the invention also comprises a mobile device 7, with the first conduit 4 and the second conduit 5 being coupled to said mobile device 7. The mobile device 7 is configured for being arranged in a removal position in which one end of the first conduit 4 associated with a corresponding cooking vessel 3 is introduced inside said cooking vessel 3 for removing the fluid, whether the first fluid, the second fluid, or even the third fluid, contained in the cooking vessel 3 through the hydraulic unit 10, in a filling position in which one end of the second conduit 5 associated with said cooking vessel 3 is introduced inside the cooking vessel 3 for filling the cooking vessel 3 with the first fluid, the second fluid, or even the third fluid through the hydraulic unit 10, and in an inactive position in which the end of the first conduit 4 and the end of the second conduit 5 are arranged outside the cooking vessel 3. In the preferred embodiment of the invention, the removal position and the filling position of the mobile device 7 are the same position although they may also be different. For example, the removal position may correspond with a position close to the bottom of the cooking vessel 3 and the filling position correspond with a position farther away from the bottom of the cooking vessel 3.

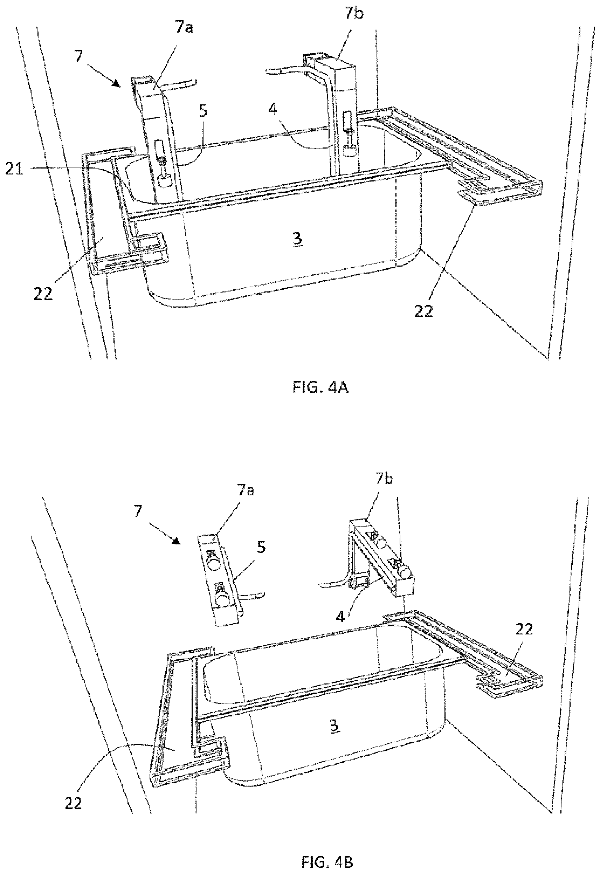

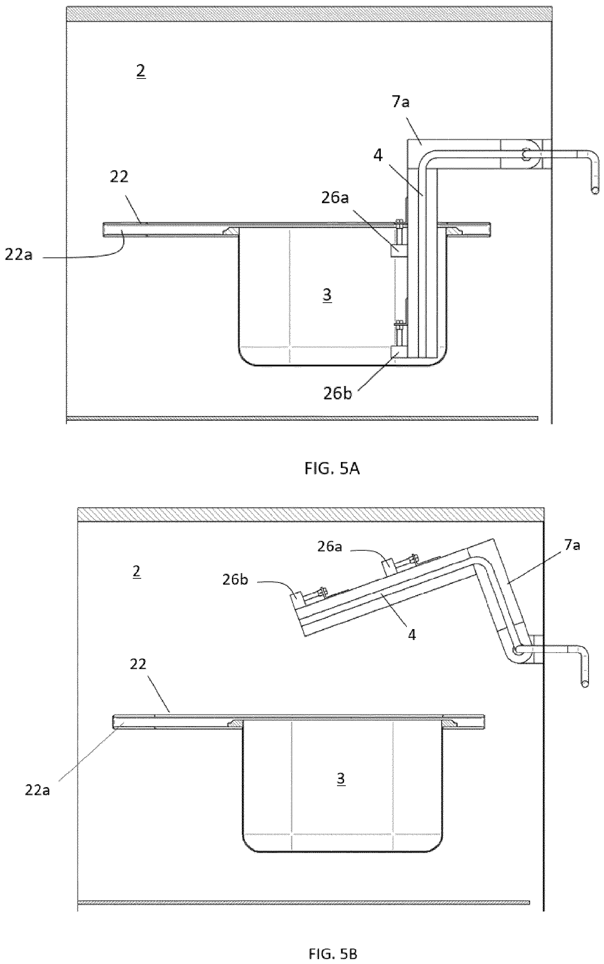

With the mobile device 7 being in the inactive position, the corresponding cooking vessel 3 can be introduced in or removed from the apparatus 100 of the invention. If the main compartment 2 of the apparatus 100 comprises more than one level, each level would have its own mobile device 7 to interact with a respective cooking vessel 3. In the preferred embodiment of the invention, the mobile device 7 is tiltable, as shown in Figures 4A, 4B, 5A, or 5B, but it may also be slidable and/or rotary, for example.

The cooking vessel 3 has been depicted in the drawings without the different fluids and without the food in order to better understand the invention.

In the preferred embodiment of the invention, the mobile device 7 comprises two inverted L-shaped arms 7a and 7b. One of the ends of each arm 7a and 7b, preferably the end corresponding to the shorter segment of the respective arm is fixed to the wall of the bottom of the apparatus 100 with possibility of rotation. Although in the preferred embodiment of the invention the two arms 7a and 7b are physically independent, both arms 7a and 7b may be joined to one another by a transverse arm, for example.

The end of the first conduit 4 and the end of the second conduit 5 are each coupled with a respective arm 7a or 7b. Although the mobile device 7 may comprise a single arm 7a or 7b in which both first and second conduits 4 and 5 would be coupled, the first conduit 4 and the second conduit 5 are preferably coupled in different arms 7a and 7b so as to generate a current or flow of the fluid contained in the corresponding cooking vessel 3 for homogenizing and maintaining the temperature of said fluid in the desired temperature range, as will be described in detail below. Both arms 7a and 7b are separated far enough apart to generate said current inside the cooking vessel 3. In the preferred embodiment of the invention, each arm 7a and 7b is arranged close to a respective side of the cooking vessel 3.

In the preferred embodiment of the invention in which the heating means 11 are arranged in the hydraulic unit 10, the first fluid is circulated between the first conduit 4 and the second conduit 5 in a closed circuit, as shown in circuit A of the upper part of Figure 6A, such that the first fluid passes continuously through the heating means 11, thereby maintaining the temperature of the hot bath during the cooking step, and since the first fluid is dynamic (i.e., not stagnant) the temperature of the hot bath contained in the corresponding cooking vessel 3 is homogenized.

In the case where the heating means 11 would be arranged inside the cooking vessel 3 during the cooking step, the first fluid would also be circulating according to the closed circuit A shown in the upper part of Figure 6A. In the case where said closed circuit A were not generated, i.e., if the first fluid would be contained in the cooking vessel 3 in a stagnant manner, it would be suitable to place a stirrer not shown in the drawings to generate a current inside the cooking vessel 3 itself. In this case, the heating means 11, preferably a resistor, would be fixed in one of the arms 7a or 7b of the mobile device 7, whereas the stirrer could be fixed in the same arm or in the other arm 7a or 7b, or even in another additional arm of the mobile device 7 not shown in the drawings. The cooking vessel 3 could thereby be removed from the main compartment 2 in the inactive position of the mobile device 7 without any difficulty.

To control the levels of the fluid, whether the first fluid, the second fluid, or even the third fluid, contained in the cooking vessel 3, the apparatus 100 of the invention comprises at least two level sensors 26a and 26b, one for detecting the maximum level and preventing the fluid 26a from overflowing, and another for detecting the minimum level 26b.

The level detectors 26a and 26b are coupled to the mobile device 7. In the preferred embodiment of the invention, the maximum level detector 26a and the minimum level detector 26b are fixed in one of the arms 7a or 7b of the mobile device 7, with the maximum detector 26a being arranged in a position farther away from the bottom of the cooking vessel 3 than the minimum detector 26b when the mobile device 7 is arranged inside the cooking vessel 3, as can be seen for example in Figure 5A. The minimum level detector 26a is arranged in a position close to the bottom of the cooking vessel 3.

As shown in Figures 4A and 4B, each arm 7a and 7b may comprise both the maximum level detector 26a and the minimum level detector 26b, although it would be sufficient for one of the arms 7a and 7b of the mobile device 7 to comprise said sensors. The fact that each arm 7a and 7b comprises a pair of maximum detector 26a and minimum detector 26b can be advantageous to allow regulating different levels of filling or adding additional safety limits.

The apparatus 100 of the invention also comprises an auxiliary compartment 9 separated from the main compartment 2, comprising an auxiliary vessel 6 for storing the second fluid and cooling means for cooling said second fluid. In the preferred embodiment of the invention, the auxiliary compartment 9 is arranged below the main compartment 2, but the relative arrangement between both compartments is not relevant.

Like a refrigeration cycle, the cooling means comprise an evaporator 12, a compressor 13, a condenser 14, and at least one fan 15. The evaporator 12 can be arranged inside the auxiliary vessel 6 or integrated in the hydraulic unit 10, as shown in the example of Figure 6.

The auxiliary compartment 9 can be divided into two levels, an upper level 9a and a lower level 9b, to thereby allow separating elements of the auxiliary compartment 9 which give off more heat, such as the compressor 13 and the condenser 14. In the preferred embodiment of the invention, the lower level 9b is arranged in the lower part of the apparatus 100, with the compressor 13, the condenser 14, and the fan 15 being arranged in said lower level 9b, as shown in Figure 3B, and the auxiliary vessel 6 in the upper level 9a. To discharge heat accumulated in said lower level 9b of the auxiliary compartment 9, the rear wall of the apparatus 100 comprises a plurality of slits or openings 27, as shown in Figure 2. Each level of the auxiliary compartment 9 comprises a detachable door 9a' and 9b' to access the desired level, as shown in Figure 1. The door 9b' of the lower level 9b also comprises a plurality of slits 27' to facilitate heat discharge.

The hydraulic means also comprise a fourth conduit 17 cooperating with the auxiliary vessel 6 for filling said auxiliary vessel 6 with the second fluid. During the cooking step, the second fluid contained in the auxiliary vessel 6 is circulated between the third conduit 3 and the fourth conduit 17 which are associated with the auxiliary vessel 6 in a closed circuit, as shown in circuit B of the lower part of Figure 6A, for cooling and maintaining the temperature of said second fluid.

Upon the conclusion of the cooking step, and of the refilling step for refilling the cooking vessel 3, if any, in the removal step for removing the first fluid, the hot bath is removed from the cooking vessel 3 following circuit D shown in Figure 6C if the content of the cooking vessel 3 is to be discharged through drainage 19 or following another circuit not shown in the drawings in order to reuse said first fluid in another cooking vessel 3.

During the blast chilling step, the hydraulic unit 10 communicates the second conduit 5 associated with the cooking vessel 3 with the third conduit 17 associated with the auxiliary vessel 6 for filling the cooking vessel 3 with the second fluid, with the cold bath being formed while said cooking vessel 3 fills up. When the second fluid has reached the desired level in the cooking vessel 3, the hydraulic unit 10 also communicates the first conduit 4 associated with the cooking vessel 3 with the fourth conduit 17 associated with the auxiliary vessel 6 such that the second fluid is circulated according to a closed circuit between the cooking vessel 3 and the auxiliary vessel 6 for maintaining the temperature of the second fluid, i.e., the temperature of the cold bath, as can be seen in circuit C of Figure 6B, since the refrigeration cycle is still working during the operation of the cooking apparatus 100. By circulating the second fluid between the cooking vessel 3 and the auxiliary vessel 6, the temperature of the cold bath in the cooking vessel 3 is homogenized.

In the preferred embodiment of the invention, the volume of the auxiliary vessel 6 is greater than the volume of the cooking vessel 3. If the apparatus 100 of the invention comprises more than one cooking vessel 3, each cooking vessel 3 may cooperate with a respective auxiliary vessel 6, or one and the same auxiliary vessel 6 (having a greater volume) may be communicated with more than one cooking vessel 3.

Upon the conclusion of the blast chilling step, in a removal step for removing the second fluid, the content of the cooking vessel 3, i.e., the second fluid, is transferred to the auxiliary vessel 6 for storage or subsequent use, for which the hydraulic unit 10 disconnects the second conduit 5 associated with the cooking vessel 3 from the third conduit 8 associated with the auxiliary vessel 6.

The management of the hydraulic unit 10 to redirect both the first fluid and the second fluid, or even the third fluid, if any, in the desired direction for generating the desired circuit (for example, to enable the emptying and/or filling of the cooking vessel 3 or the recirculation of the fluid in a closed circuit, with any of the fluids that have been described and/or the auxiliary vessel 6 with the second fluid) is achieved by activating and deactivating pumping means, preferably hydraulic pumps 16, and a plurality of valves 25 arranged in the hydraulic unit 10, as can be seen in Figure 6.

In the preferred embodiment of the invention, the hydraulic unit 10 comprises two hydraulic pumps 16. In most cases, only one of the pumps 16 will be working (according to the direction of the fluid flow to be obtained), but as long as the cooking vessel 3 does not interact with the auxiliary vessel 6 all two hydraulic pumps 16 will be working (at least while the apparatus 100 is working), one pump to generate the flow of the first fluid (or of the third fluid) and the second pump to generate the flow of the second fluid. While the apparatus 100 of the invention is working and the blast chilling step is not being performed, it is suitable to keep the closed circuit B of Figure 6A active so as to maintain the temperature of the cold bath of the second fluid.

The conduits 28 and 29 shown in Figures 2, 6, 6A, 6B, and 6C are conduits belonging to the refrigeration cycle of the cooling means.

In the preferred embodiment of the invention, the second fluid is a coolant comprising an aqueous base comprising an additive with a melting point lower than the melting point of the water, said additive preferably being glycol, for example food grade propylene glycol.

During the operation of the apparatus 100 of the invention, part of the mobile device 7 will be introduced inside the cooking vessel 3 due to the performance of either the filling step or the removal step for filling or removing the first, second, or third fluids relative to the cooking vessel 3, but upon the conclusion of the blast chilling process, the mobile device 7 will transition to the inactive position to enable comfortably removing the cooking vessel 3 containing the treated (cooked and blast chilled) food. Once the temperature of said food is blast chilled, said food can be kept in a freezer or refrigerator to preserve the food for a longer time.

The apparatus 100 of the invention is configured for performing the described method of the invention.

## Claims

1. An apparatus for cooking food and blast chilling the temperature of said food, comprising a main compartment (2) in which there is introduced at least one cooking vessel (3) in which a food, preferably vacuum packed, is submersed or immersed in a first fluid forming a hot bath for cooking said food for a given time, the apparatus (100) being configured so that the blast chilling of the temperature of the food after the cooking thereof is also performed in the main compartment (2) inside the cooking vessel (3), the apparatus (100) comprising to that end hydraulic means for replacing the first fluid in the cooking vessel (3) with a second fluid forming a cold bath, wherein the hydraulic means comprise a first conduit (4) for emptying the cooking vessel (3), a second conduit (5) for filling the cooking vessel (3), a third conduit (8) for removing the second fluid from an auxiliary vessel (6) where the second fluid is stored, and a hydraulic unit (10) communicated with the first conduit (4), the second conduit (5) and the third conduit (8), the first conduit (4) and the second conduit (5) cooperating with the cooking vessel (3) and the third conduit (8) with the auxiliary vessel (6), and the second conduit (5) being communicated with the third conduit (8) through the hydraulic unit (10) for filling the cooking vessel (3) with the second fluid contained in the auxiliary vessel (6) after the cooking vessel (3) has been emptied through the hydraulic unit (10), **characterized in that** the apparatus (100) comprises a mobile device (7), with the first conduit (4) and the second conduit (5) being coupled to said mobile device (7), the mobile device (7) being configured for being arranged in a removal position in which one end of the first conduit (4) is introduced inside the cooking vessel (3) for removing the fluid contained in the cooking vessel (3) through the hydraulic unit (10), in a filling position in which one end of the second conduit (5) is introduced inside the cooking vessel (3) for filling the cooking vessel (3) through the hydraulic unit (10), and in an inactive position in which the end of the first conduit (4) and the end of the second conduit (5) are arranged outside the cooking vessel (3),

2. The apparatus according to claim 1, wherein the removal position and the filling position of the mobile device (7) is the same position.

3. The apparatus according to claim 1 or 2, wherein the hydraulic unit (10) comprises pumping means (16) to enable emptying, filling, and/or recirculating the fluid with respect to the cooking vessel (3) and/or the auxiliary vessel (6).

4. The apparatus according to any claims claim 1 to 3, wherein the mobile device (7) is tiltable and/or slidable.

5. The apparatus according to any of claims 1 to 4, wherein the hydraulic means also comprise a fourth conduit (17) cooperating with the auxiliary vessel (6) for filling said auxiliary vessel (6) with the second fluid, the hydraulic unit (10) communicating the first conduit (4) of the cooking vessel (3) with the fourth conduit (17) of the auxiliary vessel (6) for discharging the content of the cooking vessel (3) into the auxiliary vessel (6) once the temperature of the food has been blast chilled or while the temperature of the food is being blast chilled.

6. The apparatus according to any of claims 1 to 5, wherein the hydraulic unit (10) is configured for connecting the second conduit (5) of a first cooking vessel (3) with a water network (18) or with a second cooking vessel (3) arranged in the main compartment (2) containing another hot bath for filling the first cooking vessel (3) with the first fluid, the hydraulic means comprising heating means (11) for heating the first fluid.

7. The apparatus according to claim 6, wherein the heating means (11) are arranged in the hydraulic unit (10) such that the first fluid is heated in the hydraulic unit (10), forming the hot bath as the cooking vessel (3) gradually fills up, the heating means (11) preferably being a heat exchanger.

8. The apparatus according to claim 6, wherein the heating means (11) are arranged outside the hydraulic unit (10) such that the hot bath is formed by heating the first fluid arranged in the cooking vessel (3), the heating means (11) preferably being a resistor.

9. The apparatus according to any of claims 1 to 8, comprising an auxiliary compartment (9), separated from the main compartment (2), comprising the auxiliary vessel (6) and cooling means for cooling the second fluid in the auxiliary vessel (6), said cooling means comprising at least one evaporator (12) and one compressor (13), the evaporator (12) being arranged inside the auxiliary vessel (6) or integrated in the hydraulic unit (10).

10. A method for cooking and blast chilling the temperature of food using an apparatus according to claim 1, the method comprising a cooking step in which the food is cooked submerged in the first fluid forming the hot bath arranged in the cooking vessel (3) housed in the main compartment (2) of the apparatus (100), **characterized in that** the method further comprises, with the cooking vessel (3) being housed in the main compartment (2) of the apparatus (100), a removal step for removing the first fluid from the cooking vessel (3) and a filling step for filling the cooking vessel (3) with a second fluid forming a cold bath, such that a blast chilling step is carried out by keeping the food in the cooking vessel (3) and the cooking vessel (3) in the main compartment (2).

11. The method according to claim 10, wherein after the removal step for removing the first fluid from the cooking vessel (3) and before the filling step for filling the cooking vessel (3) with the second fluid, the method may comprise a refilling step for refilling the cooking vessel (3) with a third fluid, preferably mains water, and a removal step for removing said third fluid after a given time.

12. The method according to claim 10 or 11, wherein in the filling step for filling the cooking vessel (3) with the second fluid, said second fluid is transferred from an auxiliary vessel (6) arranged in an auxiliary compartment (9), separated from the main compartment (2), in which the second fluid is previously cooled.

13. The method according to claim 12, wherein during the blast chilling step the second fluid moves according to a closed circuit between the cooking vessel (3) and the auxiliary vessel (6) so as to maintain the temperature of the cold bath.

14. The method according to claim 12 or 13, wherein after the blast chilling step there is a removal step for removing the second fluid in which said second fluid is transferred back to the auxiliary vessel (6).

## Patentansprüche

1. Vorrichtung zum Kochen von Lebensmitteln und zum Schnellabkühlen der Temperatur des Lebensmittels, umfassend ein Hauptfach (2), in das mindestens ein Kochgefäß (3) eingeführt wird, in dem ein Lebensmittel, vorzugsweise vakuumverpackt, in ein erstes Fluid eingetaucht oder untergetaucht wird, das ein Heißbad zum Kochen des Lebensmittels für eine gegebene Zeit bildet, wobei die Vorrichtung (100) dazu konfiguriert ist, dass das Schnellabkühlen der Temperatur des Lebensmittels nach dem Kochen davon auch in dem Hauptfach (2) innerhalb des Kochgefäßes (3) durchgeführt wird, wobei die Vorrichtung (100) hierzu hydraulische Mittel umfasst, um das erste Fluid in dem Kochgefäß (3) durch ein zweites Fluid zu ersetzen, das ein Kaltbad bildet, wobei die hydraulischen Mittel eine erste Leitung (4) zum Entleeren des Kochgefäßes (3), eine zweite Leitung (5) zum Füllen des Kochgefäßes (3), eine dritte Leitung (8) zum Entnehmen des zweiten Fluids aus einem Hilfsgefäß (6), in dem das zweite Fluid gespeichert ist, und eine hydraulische Einheit (10) umfassen, in Verbindung mit der ersten Leitung (4), der zweiten Leitung (5) und der dritten Leitung (8), wobei die erste Leitung (4) und die zweite Leitung (5) mit dem Kochgefäß (3) und die dritte Leitung (8) mit dem Hilfsgefäß (6) zusammenwirken und wobei die zweite Leitung (5) mit der dritten Leitung (8) über die hydraulische Einheit (10) in Verbindung steht, um das Kochgefäß (3) mit dem in dem Hilfsgefäß (6) enthaltenen zweiten Fluid zu füllen, nachdem das Kochgefäß (3) über die hydraulische Einheit (10) entleert worden ist, **dadurch gekennzeichnet, dass** die Vorrichtung (100) eine mobile Vorrichtung (7) umfasst, wobei die erste Leitung (4) und die zweite Leitung (5) mit der mobilen Vorrichtung (7) gekoppelt sind, wobei die mobile Vorrichtung (7) dazu konfiguriert ist, in einer Entnahmeposition, in der ein Ende der ersten Leitung (4) in das Innere des Kochgefäßes (3) eingeführt wird, um das Fluid, das in dem Kochgefäß (3) enthalten ist, durch die hydraulische Einheit (10) zu entnehmen, in einer Füllposition, in der ein Ende der zweiten Leitung (5) in das Innere des Kochgefäßes (3) eingeführt ist, um das Kochgefäß (3) durch die hydraulische Einheit (10) zu füllen, und in einer inaktiven Position angeordnet zu sein, in der das Ende der ersten Leitung (4) und das Ende der zweiten Leitung (5) außerhalb des Kochgefäßes (3) angeordnet sind.

2. Vorrichtung nach Anspruch 1, wobei die Entnahmeposition und die Füllposition der mobilen Vorrichtung (7) die gleiche Position ist.

3. Vorrichtung nach Anspruch 1 oder 2, wobei die hydraulische Einheit (10) Pumpmittel (16) umfasst, um das Entleeren, Füllen und/oder Rückführen des Fluids in Bezug auf das Kochgefäß (3) und/oder das Hilfsgefäß (6) zu ermöglichen.

4. Vorrichtung nach einem der Ansprüche 1 bis 3, wobei die mobile Vorrichtung (7) kippbar und/oder verschiebbar ist.

5. Vorrichtung nach einem der Ansprüche 1 bis 4, wobei die hydraulischen Mittel auch eine vierte Leitung (17) umfassen, die mit dem Hilfsgefäß (6) zusammenwirkt, um das Hilfsgefäß (6) mit dem zweiten Fluid zu füllen, wobei die hydraulische Einheit (10) die erste Leitung (4) des Kochgefäßes (3) mit der vierten Leitung (17) des Hilfsgefäßes (6) in Verbindung setzt, um den Inhalt des Kochgefäßes (3) in das Hilfsgefäß (6) zu entladen, sobald die Temperatur des Lebensmittels schnellabgekühlt wurde oder während die Temperatur des Lebensmittels schnellabgekühlt wird.

6. Vorrichtung nach einem der Ansprüche 1 bis 5, wobei die hydraulische Einheit (10) dazu konfiguriert ist, die zweite Leitung (5) eines ersten Kochgefäßes (3) mit einem Wassernetzwerk (18) oder mit einem zweiten Kochgefäß (3) zu verbinden, das in dem Hauptfach (2) angeordnet ist, das ein weiteres Heißbad zum Füllen des ersten Kochgefäßes (3) mit dem ersten Fluid enthält, wobei die hydraulischen Mittel Heizmittel (11) zum Erhitzen des ersten Fluids umfassen.

7. Vorrichtung nach Anspruch 6, wobei die Heizmittel (11) derart in der hydraulischen Einheit (10) angeordnet sind, dass das erste Fluid in der hydraulischen Einheit (10) erhitzt wird, wobei das Heißbad gebildet wird, während sich das Kochgefäß (3) allmählich füllt, wobei die Heizmittel (11) vorzugsweise ein Wärmetauscher sind.

8. Vorrichtung nach Anspruch 6, wobei die Heizmittel (11) derart außerhalb der hydraulischen Einheit (10) angeordnet sind, dass das Heißbad durch Erhitzen des in dem Kochgefäß (3) angeordneten ersten Fluids gebildet wird, wobei die Heizmittel (11) vorzugsweise ein Widerstand sind.

9. Vorrichtung nach einem der Ansprüche 1 bis 8, umfassend ein Hilfsfach (9), das von dem Hauptfach (2) getrennt ist, umfassend das Hilfsgefäß (6) und Kühlmittel zum Kühlen des zweiten Fluids in dem Hilfsgefäß (6), wobei die Kühlmittel mindestens einen Verdampfer (12) und einen Kompressor (13) umfassen, wobei der Verdampfer (12) innerhalb des Hilfsgefäßes (6) angeordnet oder in die hydraulische Einheit (10) integriert ist.

10. Verfahren zum Kochen und Schnellabkühlen der Temperatur von Lebensmitteln unter Verwendung einer Vorrichtung nach Anspruch 1, wobei das Verfahren einen Kochschritt umfasst, bei dem das Lebensmittel unter Eintauchen in das erste Fluid gekocht wird, das das Heißbad bildet, das in dem Kochgefäß (3) angeordnet ist, das in dem Hauptfach (2) der Vorrichtung (100) aufgenommen ist, **dadurch gekennzeichnet, dass** das Verfahren ferner, bei im Hauptfach (2) der Vorrichtung (100) aufgenommenem Kochgefäß (3), einen Entnahmeschritt zum Entnehmen des ersten Fluids aus dem Kochgefäß (3) und einen Füllschritt zum Füllen des Kochgefäßes (3) mit einem zweiten Fluid, das ein Kaltbad bildet, umfasst, derart, dass ein Schnellabkühlungsschritt durchgeführt wird, indem das Lebensmittel in dem Kochgefäß (3) und das Kochgefäß (3) in dem Hauptfach (2) gehalten wird.

11. Verfahren nach Anspruch 10, wobei das Verfahren nach dem Entnahmeschritt zum Entnehmen des ersten Fluids aus dem Kochgefäß (3) und vor dem Füllschritt zum Füllen des Kochgefäßes (3) mit dem zweiten Fluid einen Nachfüllschritt zum Nachfüllen des Kochgefäßes (3) mit einem dritten Fluid, vorzugsweise Leitungswasser, und einen Entnahmeschritt zum Entnehmen des dritten Fluids nach einer gegebenen Zeit umfassen kann.

12. Verfahren nach Anspruch 10 oder 11, wobei im Füllschritt zum Füllen des Kochgefäßes (3) mit dem zweiten Fluid das zweite Fluid von einem Hilfsgefäß (6) transferiert wird, das in einem vom Hauptfach (2) getrennten Hilfsfach (9) angeordnet ist, in dem das zweite Fluid zuvor gekühlt wird.

13. Verfahren nach Anspruch 12, wobei sich während des Schnellabkühlungsschritts das zweite Fluid gemäß einem geschlossenen Kreislauf zwischen dem Kochgefäß (3) und dem Hilfsgefäß (6) bewegt, um die Temperatur des Kaltbads zu erhalten.

14. Verfahren nach Anspruch 12 oder 13, wobei nach dem Schnellabkühlungsschritt ein Entnahmeschritt zum Entnehmen des zweiten Fluids erfolgt, in dem das zweite Fluid zurück in das Hilfsgefäß (6) transferiert wird.

## Revendications

1. Appareil de cuisson des aliments et de refroidissement rapide de la température desdits aliments, comprenant un compartiment principal (2) dans lequel est introduit au moins un récipient de cuisson (3) dans lequel des aliments, de préférence emballés sous vide, sont submergés ou immergés dans un premier fluide formant un bain chaud pour la cuisson desdits aliments pendant un temps donné, l'appareil (100) étant configuré de sorte que le refroidissement rapide de la température des aliments après sa cuisson est également réalisé dans le compartiment principal (2) à l'intérieur du récipient de cuisson (3), l'appareil (100) comprenant à cet effet des moyens hydrauliques pour remplacer le premier fluide dans le récipient de cuisson (3) avec un deuxième fluide formant un bain froid, dans lequel les moyens hydrauliques comprennent un premier conduit (4) pour vider le récipient de cuisson (3), un deuxième conduit (5) pour remplir le récipient de cuisson (3), un troisième conduit (8) pour retirer le deuxième fluide à partir d'un récipient auxiliaire (6) où le deuxième fluide est stocké, et une unité hydraulique (10) en communication avec le premier conduit (4), le deuxième conduit (5) et le troisième conduit (8), le premier conduit (4) et le deuxième conduit (5) coopérant avec le récipient de cuisson (3) et le troisième conduit (8) avec le récipient auxiliaire (6), et le deuxième conduit (5) étant en communication avec le troisième conduit (8) à travers l'unité hydraulique (10) pour remplir le récipient de cuisson (3) avec le deuxième fluide contenu dans le récipient auxiliaire (6) après que le récipient de cuisson (3) a été vidé à travers l'unité hydraulique (10), **caractérisé en ce que** l'appareil (100) comprend un dispositif mobile (7), le premier conduit (4) et le deuxième conduit (5) étant couplés audit dispositif mobile (7), le dispositif mobile (7) étant configuré pour être disposé dans une position de retrait dans laquelle une extrémité du premier conduit (4) est introduite à l'intérieur du récipient de cuisson (3) pour retirer le fluide contenu dans le récipient de cuisson (3) à travers l'unité hydraulique (10), dans une position de remplissage dans laquelle une extrémité du deuxième conduit (5) est introduite à l'intérieur du récipient de cuisson (3) pour remplir le récipient de cuisson (3) à travers l'unité hydraulique (10), et dans une position inactive dans laquelle l'extrémité du premier conduit (4) et l'extrémité du deuxième conduit (5) sont disposées à l'extérieur du récipient de cuisson (3).

2. Appareil selon la revendication 1, dans lequel la position de retrait et la position de remplissage du dispositif mobile (7) sont la même position.

3. Appareil selon la revendication 1 ou 2, dans lequel l'unité hydraulique (10) comprend des moyens de pompage (16) pour permettre la vidange, le remplissage et/ou la recirculation du fluide par rapport au récipient de cuisson (3) et/ou au récipient auxiliaire (6).

4. Appareil selon l'une quelconque des revendications 1 à 3, dans lequel le dispositif mobile (7) peut être incliné et/ou peut coulisser.

5. Appareil selon l'une quelconque des revendications 1 à 4, dans lequel les moyens hydrauliques comprennent en outre un quatrième conduit (17) coopérant avec le récipient auxiliaire (6) pour remplir ledit récipient auxiliaire (6) avec le deuxième fluide, l'unité hydraulique (10) mettant le premier conduit (4) du récipient de cuisson (3) en communication avec le quatrième conduit (17) du récipient auxiliaire (6) pour décharger le contenu du récipient de cuisson (3) dans le récipient auxiliaire (6) une fois que la température des aliments a été refroidie rapidement ou pendant que la température des aliments est en train d'être refroidie rapidement.

6. Appareil selon l'une quelconque des revendications 1 à 5, dans lequel l'unité hydraulique (10) est configurée pour relier le deuxième conduit (5) d'un premier récipient de cuisson (3) avec un réseau d'eau (18) ou avec un deuxième récipient de cuisson (3) disposé dans le compartiment principal (2) contenant un autre bain chaud pour remplir le premier récipient de cuisson (3) avec le premier fluide, les moyens hydrauliques comprenant des moyens de chauffage (11) pour chauffer le premier fluide.

7. Appareil selon la revendication 6, dans lequel les moyens de chauffage (11) sont disposés dans l'unité hydraulique (10) de sorte que le premier fluide est chauffé dans l'unité hydraulique (10), formant le bain chaud au fur et à mesure que le récipient de cuisson (3) se remplit progressivement, les moyens de chauffage (11) étant de préférence un échangeur de chaleur.

8. Appareil selon la revendication 6, dans lequel les moyens de chauffage (11) sont disposés à l'extérieur de l'unité hydraulique (10) de sorte que le bain chaud est formé en chauffant le premier fluide disposé dans le récipient de cuisson (3), les moyens de chauffage (11) étant de préférence une résistance.

9. Appareil selon l'une quelconque des revendications 1 à 8, comprenant un compartiment auxiliaire (9), séparé du compartiment principal (2), comprenant le récipient auxiliaire (6) et des moyens de refroidissement pour refroidir le deuxième fluide dans le récipient auxiliaire (6), lesdits moyens de refroidissement comprenant au moins un évaporateur (12) et un compresseur (13), l'évaporateur (12) étant disposé à l'intérieur du récipient auxiliaire (6) ou intégré dans l'unité hydraulique (10).

10. Procédé de cuisson et de refroidissement rapide de la température des aliments en utilisant un appareil selon la revendication 1, le procédé comprenant une étape de cuisson dans laquelle les aliments sont cuits immergés dans le premier fluide formant le bain chaud disposé dans le récipient de cuisson (3) logé dans le compartiment principal (2) de l'appareil (100), **caractérisé en ce que** le procédé comprend en outre, avec le récipient de cuisson (3) étant logé dans le compartiment principal (2) de l'appareil (100), une étape de retrait pour retirer le premier fluide à partir du récipient de cuisson (3) et une étape de remplissage pour remplir le récipient de cuisson (3) avec un deuxième fluide formant un bain froid, de sorte qu'une étape de refroidissement rapide est mis en ouvre en maintenant les aliments dans le récipient de cuisson (3) et le récipient de cuisson (3) dans le compartiment principal (2).

11. Procédé selon la revendication 10, dans lequel, après l'étape de retrait pour retirer le premier fluide à partir du récipient de cuisson (3) et avant l'étape de remplissage pour remplir le récipient de cuisson (3) avec le deuxième fluide, le procédé peut comprendre une étape de remplissage à nouveau pour remplir à nouveau le récipient de cuisson (3) avec un troisième fluide, de préférence de l'eau du réseau, et une étape de retrait pour retirer ledit troisième fluide après un temps donné.

12. Procédé selon la revendication 10 ou 11, dans lequel, dans l'étape de remplissage pour remplir le récipient de cuisson (3) avec le deuxième fluide, ledit deuxième fluide est transféré à partir d'un récipient auxiliaire (6) disposé dans un compartiment auxiliaire (9), séparé du compartiment principal (2), dans lequel le deuxième fluide est préalablement refroidit.

13. Procédé selon la revendication 12, dans lequel, pendant l'étape de refroidissement rapide, le deuxième fluide se déplace selon un circuit fermé entre le récipient de cuisson (3) et le récipient auxiliaire (6) de sorte à maintenir la température du bain froid.

14. Procédé selon la revendication 12 ou 13, dans lequel, après l'étape de refroidissement rapide, il y a une étape de retrait pour retirer le deuxième fluide dans laquelle ledit deuxième fluide est transféré de retour vers le récipient auxiliaire (6).
